# EUROPEAN PATENT APPLICATION

(11) **EP 3 139 224 A1**
(43) Date of publication of application: **08.03.2017**
(21) Application number: 15785847.3
(22) Date of filing: 23.01.2015
(51) Int. Cl.: G05B 19/05

(54) **PROGRAMMABLE CONTROLLER AND PROGRAM DEVELOPMENT SUPPORT DEVICE**

(30) Priority: 30.04.2014 JP 2014093420
(71) Applicant: Panasonic Industrial Devices SUNX Co., Ltd., Aichi 486-0901 (JP)
(72) Inventor: KOBAYASHI, Naoya, Kasugai-shi Aichi 486-0901 (JP); HASEGAWA, Yoshinori, Kasugai-shi Aichi 486-0901 (JP); HOSHIBA, Takashi, Kasugai-shi Aichi 486-0901 (JP)
(74) Representative: Plougmann Vingtoft a/s
(86) International application number: PCT/JP2015/051796
(87) International publication number: WO 2015/166676

(57) **Abstract**

An object of the invention is to provide a programmable controller and a program development support device capable of changing functions easily. Input sections and logical sections that can be selected as output sources of signals to be operated in each of logical sections are determined in advance. The logical sections that can be selected as output sources of signals to be output from output sections are also determined in advance. Contents that can be set as contents of a logical operation in each of the logical sections are also determined in advance. The number of logical sections is also determined in advance. An operator determines the output sources and the contents of logical operations from determined ranges to complete a program for operating a PLC (10).

## Description

### TECHNICAL FIELD

The present invention relates to a programmable controller and a program development support device.

### BACKGROUND ART

In the background art, a safety controller has been provided as a programmable controller for ensuring high safety and reliability in various kinds of control. Such a safety controller has various functions including a general logical computation function, an input/output control function, etc.

Various program development support devices have been provided for producing programs for controlling such safety controllers (for example, Patent Document 1). Patent Document 1 discloses a program development support device for supporting development of a program using function blocks. By use of the program development support device, it is possible to verify programming while reducing programming mistakes.

### PRIOR ART DOCUMENT(S)

### PATENT DOCUMENT(S)

Patent Document 1: JP-A-2010-55652

### SUMMARY OF THE INVENTION

### PROBLEM(S) TO BE SOLVED BY THE INVENTION

Each function block includes a large number of functions. In addition, a large number of such function blocks are prepared. Thus, various kinds of control can be achieved. However, a complex program can be created by the combination of a large number of function blocks each having a large number of functions while the complexity leads to difficulty in programming.

Accordingly, there is a problem that it is difficult for a person to create a control program in spite of use of the program development support device unless the person has detailed knowledge about the function blocks.

The present invention has been developed while paying attention to the above-described problem belonging to the background art. An object of the invention is to provide a programmable controller and a program development support device capable of changing functions easily.

### MEANS FOR SOLVING PROBLEM(S)

In order to solve the foregoing problem, a programmable controller includes: one or plural input blocks to which signals can be input from an outside; one or plural output blocks from which signals can be output to the outside; one or plural logical blocks capable of performing various local operations based on input signals and capable of outputting signals as results of the operations; and setting means for performing various settings, wherein contents that can be set as contents of the logical operation of each of the logical blocks are determined in advance, wherein based on setting information, the setting means sets, from the input blocks and the logical blocks, one or plural output sources of signals to be operated in each of the logical blocks, and sets the contents of the logical operation of the logical block, wherein based on the setting information, the setting means sets, from the logical blocks, an output source of a signal to be output from each of the output blocks, and wherein the setting information includes at least information about the output sources of signals to be operated in each of the logical blocks, information about the contents of the logical operation of each of the logical blocks, and information about the output source of the signal to be output in each of the output blocks.

According to this configuration, the number of input blocks, the number of output blocks, and the number of logical blocks are determined in advance. That is, blocks that can be selected as output sources of signals to be operated in each logical block are determined in advance. Logical blocks that can be selected as an output source of a signal to be output from each output block are also determined in advance. Contents that can be set as the contents of a logical operation in each logical block are also determined in advance. Therefore, when an operator determines output sources and the contents of logical operations within the determined ranges, a program for operating the programmable controller can be completed. Thus, functions can be changed easily. In addition, programs that can be set can be restricted in advance.

The programmable controller may further include: operating means operable by an operator; and storage means for storing a plurality of kinds of the setting information, wherein the setting means selects, based on an operation on the operating means, setting information from the setting information stored in the storage means, and performs various kinds of settings based on the selected setting information.

According to this configuration, due to the setting information stored in advance, the operator can perform various settings only if the operator operates the operating means to select the setting information. Accordingly, the operator does not have to select connection destinations or determination contents to create all the setting information, but the operator can change functions more easily.

In the programmable controller, a number of logical blocks may be set to be smaller than a number of input blocks by one.

According to this configuration, it is possible to provide enough logical blocks to perform logical operations based on the input signals.

In the programmable controller, binary signals may be input to the input blocks, the logical blocks and the output blocks, respectively, and the input blocks, the logical blocks and the output blocks may output binary signals, respectively.

According to this configuration, a module structure in which ON/OFF binary signals are delivered among the blocks can be provided to suppress patterns with which a program should be verified.

In order to solve the above-described problem, a program development support device can be connected to the programmable controller. The program development support device includes: setting information operating means operable by an operator, wherein the setting information is created by selecting, based on an operation of the setting information operating means, at least the output sources of signals to be operated in each of the logical blocks, the contents of the logical operation of the logical block, and the output source of the signal to be output from each of the output blocks.

According to this configuration, the setting information can be created more easily by the program development support device.

### ADVANTAGE(S) OF THE INVENTION

According to the invention, functions can be changed easily.

### BRIEF DESCRIPTION OF THE DRAWING(S)

Fig. 1 is a perspective view of a programmable controller.
Fig. 2 is a sectional view of the programmable controller.
Fig. 3 is a block diagram showing an electrical configuration of the PLC.
Fig. 4 is a block diagram showing an input portion.
Fig. 5 is a block diagram showing a logical portion.
Fig. 6 is a block diagram showing an output portion.
Fig. 7 is a block diagram showing a configuration of the PLC set based on first setting information.
Fig. 8 is a block diagram showing a configuration of the PLC set based on second setting information.
Fig. 9 is a block diagram showing a configuration of the PLC set based on third setting information.
Fig. 10 is a block diagram showing a configuration of the PLC set based on fourth setting information.
Fig. 11 is a block diagram showing a configuration of the PLC set based on fifth setting information.
Fig. 12 is a block diagram showing a configuration of the PLC set based on sixth setting information.
Fig. 13 is a block diagram showing a configuration of the PLC set based on seventh setting information.
Fig. 14 is a block diagram showing a configuration of the PLC set based on eighth setting information.

### MODE FOR CARRYING OUT THE INVENTION

A programmable controller (PLC) according to this embodiment will be described below.

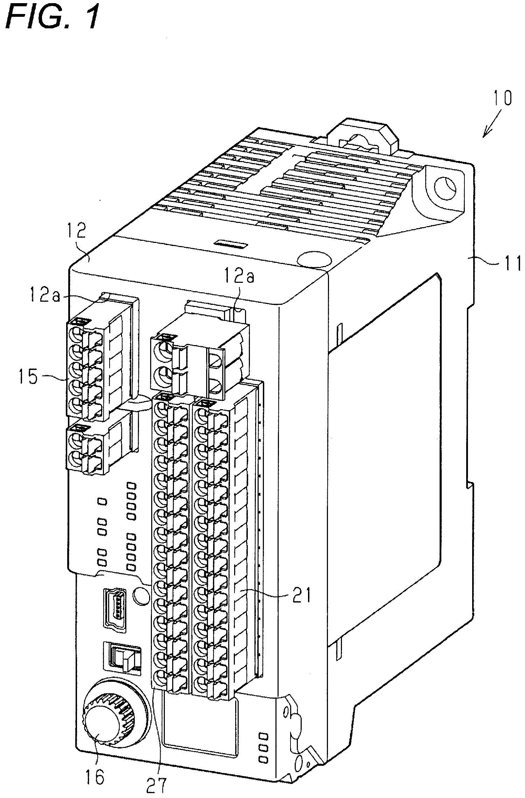

As shown in Fig. 1, a box-like PLC 10 has a case 11 and a cover 12. The case 11 has a rectangular parallelepiped shape that is open on a side face thereof. The open portion of the case 11 is closed by the cover 12.

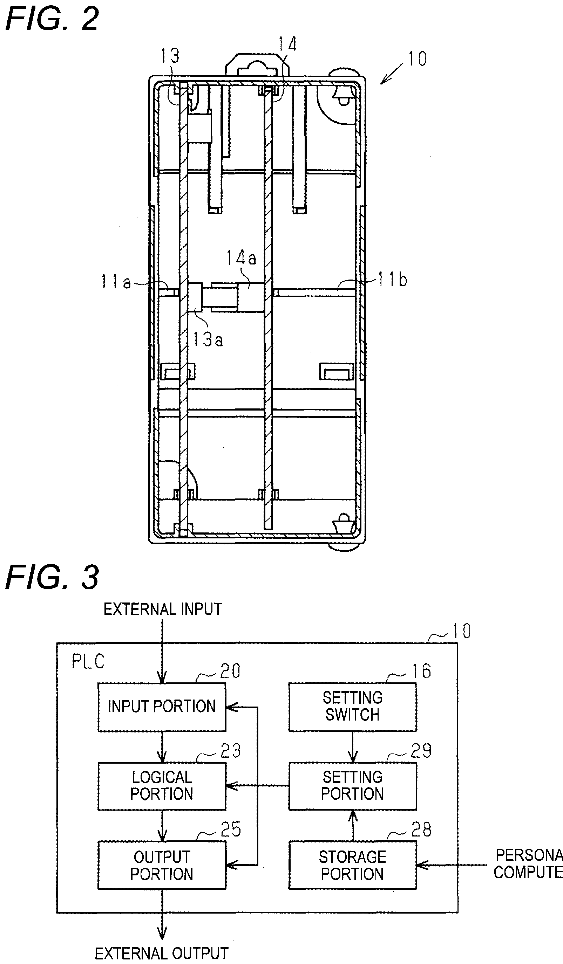

As shown in Fig. 2, a control board 13 in which a circuit for performing various arithmetic operations is disposed, and an input/output board 14 in which a circuit for performing input/output control on signals is disposed are received in parallel to each other in the case 11. On that occasion, the control board 13 and the input/output board 14 are received so that the surfaces of the control board 13 and the input/output board 14 can be placed in parallel to the inner side surfaces of the case 11.

As shown in Fig. 1, the cover 12 is attached to the case 11 so as to close the open portion of the case 11 in the state where the control board 13 and the input/output board 14 have been received in the case 11. Communication ports 15 for establishing connection with the control board 13, and a through hole 12a for exposing input terminals 21 and output terminals 27 provided on the input/output board 14 are formed in the cover 12. When the cover 12 is attached to the case 11, those terminals etc. can be exposed to the outside through the through hole 12a.

As shown in Fig. 2, the control board 13 is provided with a connector 13a for making inter-board input/output of signals with the input/output board 14. In the same manner, the input/output board 14 is provided with a connector 14a for making inter-board input/output of signals with the control board 13. The control board 13 and the input/output board 14 are received in the case 11 in the state where the connectors of the both have been connected to each other.

In the case 11, a rib 11a is provided to extend from an inner side surface of the case 11 toward the control board 13 and perpendicularly to the control board 13. In the case 11, a rib 11b is provided to extend from the opposite inner side surface to the side surface where the rib 11a is provided, toward the input/output board 14 and perpendicularly to the input/output board 14.

The ribs 1a and 11b are disposed in one and the same straight line so that the control board 13 and the input/output board 14 can be held therebetween from the outside when the control board 13 and the input/output board 14 are received. The ribs 11 a and 11b can be disposed substantially on the same straight line as the connectors 13a and 14a when the ribs 11a and 11b are disposed to hold the control board 13 and the input/output board 14 therebetween. Since the ribs 11a and 11b are disposed in this manner, the ribs 11a and 11b and the connectors 13a and 14a serve as supports so that distortion of the case 11 can be suppressed as well as possible even if an impact is applied from a direction perpendicular to the control board 13 and the input/output board 14. Thus, the cover 12 can be suppressed from dropping off due to the distortion of the case 11. In addition, the case 11 can be prevented from cracking easily.

Next, the electrical configuration of the PLC 10 will be described with reference to Fig. 3.

The PLC 10 is provided with an input portion 20. The input portion 20 is arranged in the input/output board 14. The PLC 10 according to the embodiment has a configuration in which ON/OFF binary signals are transmitted and received.

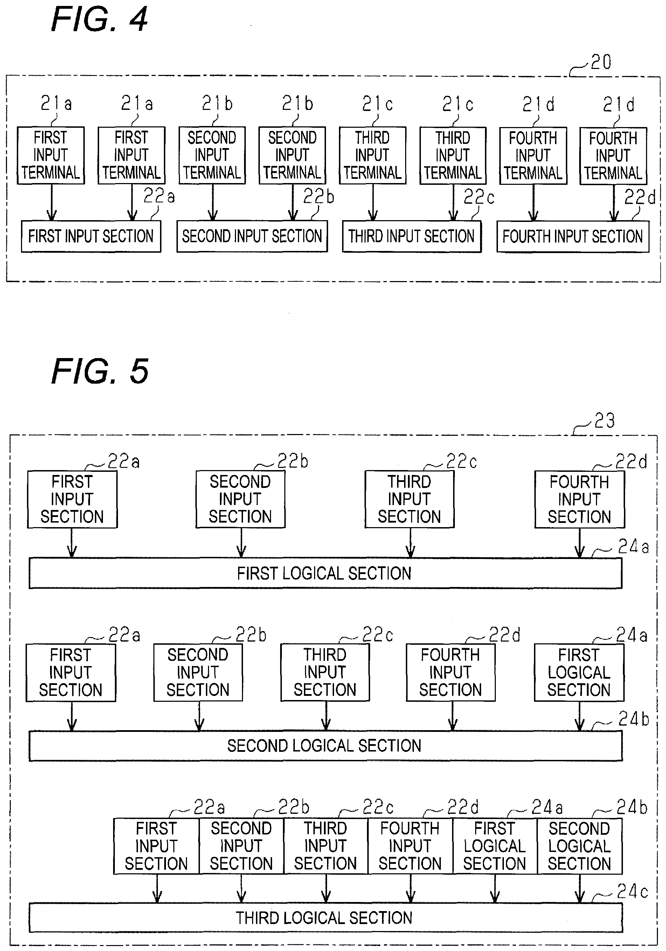

As shown in Fig. 4, a plurality (eight in the embodiment) of input terminals 21 are provided in the input portion 20. Each input terminal 21 can be connected to an external device so that a signal can be received from the connected external device. The input portion 20 has four input sections 22, that is, the first input section 22a to the fourth input section 22d. The first input section 22a to the fourth input section 22d may be collectively referred to as the input sections 22. Each input section 22 is connected to two input terminals 21 to be paired, so that a signal can be input to the input terminals 21. The input terminals 21 are paired so that one and the same signal can be input through different routes for safety control.

In the embodiment, the input terminals 21 through which signals are input to the first input section 22a are collectively referred to as first input terminals 21a. The input terminals 21 through which signals are input to the second input section 22b are collectively referred to as second input terminals 21b. The input terminals 21 through which signals are input to the third input section 22c are collectively referred to as first input terminals 21c. The input terminals 21 through which signals are input to the fourth input section 22d are collectively referred to as fourth input terminals 21 d.

When a signal is input to each input section 22, an input state of the signal in the input section 22 is determined based on an input interface function block (hereinafter referred to as input interface FB) set in the input section 22. That is, the input portion 20 sets up to four input states for each input section 22. Each input section 22 supplies a signal corresponding to the determined input state to a logical section 24 and so on as will be described later.

The input interface FB set in each section 22 is set based on setting information stored in the PLC 10. For example, 2NC contact input (single/dual) or 1NO/1NC contact input (single/dual) to be applied to a safety switch or the like, semiconductor input to be applied to a light curtain or the like, muting input as dedicated input, override input, switching input, test input, no input, etc. are prepared as input interface FBs that can be set.

As shown in Fig. 3, the PLC 10 is provided with a logical portion 23. Incidentally, the logical portion 23 is arranged in the control board 13 so that signals can be input thereto from the input portion 20 in the input/output board 14 through the connectors 13a and 14a.

As shown in Fig. 5, the logical portion 23 has one or plural (three in the embodiment) logical sections 24 as operating blocks. Speaking more in detail, the logical portion 23 has a structure of three hierarchies, and one logical section 24 is provided in each hierarchy.

First, description will be made about the first logical section 24a in the first hierarchy.

The first logical section 24a in the first hierarchy is arranged so that signals from the respective input sections 22 can be input thereto. In the first logical section 24a, which input signals should be operated is set based on setting information. For example, a signal input from the first input section 22a and a signal input from the third input section 22c are set as signals to be operated.

The first logical section 24a in the first hierarchy performs a logical operation on the signals to be operated, based on a logical function block (hereinafter, referred to as logical FB) set in the first logical section 24a. The logical FB set in the first logical section 24a is set based on the setting information. For example, AND logic, OR logic, two-hand control logic, first (parallel) muting logic, second (sequential) muting logic, input selection logic, and no logic are prepared as logical FBs that can be set in the first logical section 24a. The first muting logic is different from the second muting logic as to the number of signals to be operated. The first logical section 24a is arranged so that it can output a signal based on an operation result of the logical operation.

Next, description will be made about the second logical section 24b in the second hierarchy.

The second logical section 24b in the second hierarchy is arranged so that signals from the respective input sections 22 and the first logical section 24a can be input thereto. In the second logical section 24b, in the same manner as in the first logical section 24a, which input signals should be operated is set based on the setting information. In the second logical section 24b, a signal input from the first logical section 24a can be also set as one of the signals to be operated.

The second logical section 24b performs a logical operation on the signals to be operated, based on a set logical FB in the same manner as the first logical section 24a. The logical FB set in the second logical section 24b is set based on the setting information. For example, AND logic, OR logic, and no logic are prepared as logical FBs that can be set in the second logical section 24b. The second logical section 24b is arranged so that it can output a signal based on an operation result of the logical operation.

Next, description will be made about the third logical section 24c in the third hierarchy.

The third logical section 24c in the third hierarchy is arranged so that signals from the respective input sections 22, the first logical section 24a and the second logical section 24b can be input thereto. In the third logical section 24c, in the same manner as in the first logical section 24a or the second logical section 24b, which input signals should be operated is set based on the setting information. In the third logical section 24c, signals input from the first logical section 24a and the second logical section 24b can be also set as ones of the signals to be operated.

The third logical section 24c performs a logical operation on the signals to be operated, based on a set logical FB in the same manner as the first logical section 24a. The logical FB set in the third logical section 24c is set based on the setting information. For example, AND logic, OR logic, and no logic are prepared as logical FBs that can be set in the third logical section 24c. The third logical section 24c is arranged so that it can output a signal based on an operation result of the logical operation.

As shown in Fig. 3, the PLC 10 has an output portion 25 as an output block. The output portion 25 is arranged in the input/output board 14 so that signals can be input thereto from the logical portion 23 etc. in the control board 13 through the connectors 13a and 14a.

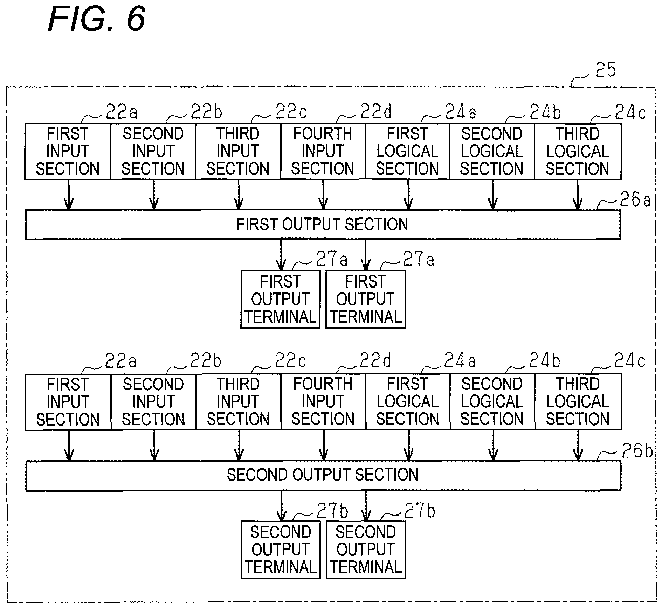

As shown in Fig. 6, the output portion 25 has a first output section 26a and a second output section 26b. The first output section 26a and the second output section 26b may be collectively referred as to as output sections 26 below.

Each output section 26 is arranged so that signals from the respective input sections 22 and the first logical section 24a to the third logical section 24c can be input thereto. In the output section 26, which input signal should be output is set based on the setting information. For example, a signal input from the third logical section 24c is set to be output.

Each output section 26 sets an output mode of a signal to be output, based on the setting information. An example of the output mode is to specify an off-delay time for delaying the time when the output signal will be off. The off-delay time can be set within a range from 0 to several seconds. Another output mode relates to a reset mode requiring a reset input. In the reset mode, for example, manual reset and automatic reset can be selected for interlock. All reset and partial reset can be also selected to achieve reset control.

Each output section 26 is connected to two output terminals 27, which are paired. Each output terminal 27 can be connected to an external device so that a signal can be output to the connected external device. Each output section 26 outputs a signal set to be output, through the output terminals 27 in the set output mode. For safety control, each output section 26 outputs the signal through the two paired output terminals 27 to thereby make the output redundant. Each output terminal 27 that can output a signal from the first output section 26a may be referred to as a first output terminal 27a below. Each output terminal 27 that can output a signal from the second output section 26b may be referred to as a second output terminal 27b below.

As shown in Fig. 3, the PLC 10 is provided with a storage portion 28. The storage portion 28 is arranged in the control board 13. A plurality (eight in the embodiment) of sets of setting information are stored in the storage portion 28 in advance. The setting information is arranged so that one of the stored sets can be selected by operation on a setting switch 16 provided on the PLC 10.

A setting portion 29 constituted by a CPU etc. is provided in the PLC 10. Based on the setting information selected by the setting switch 16, the setting portion 29 makes control to perform various settings on the input sections 22, the logical sections 24 and the output sections 26. The setting portion 29 is arranged in the control board 13.

Next, description will be made about the electric configuration of the PLC 10 when various settings have been performed based on the setting information stored in advance.

First, description will be made about a case where various settings have been performed based on first setting information.

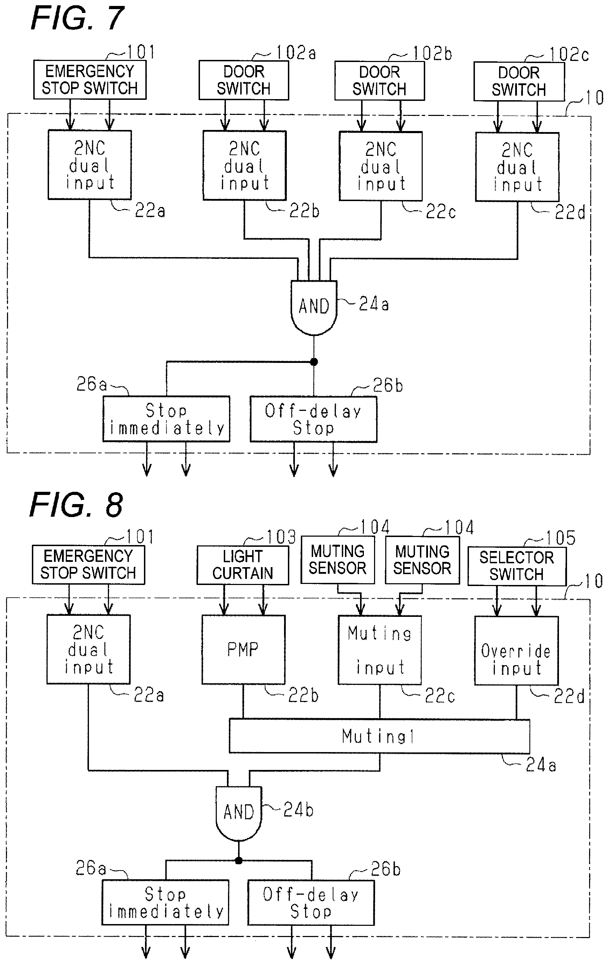

As shown in Fig. 7, the first input section 22a is arranged so that a signal from an emergency stop switch 101 of not-shown equipment can be input thereto. The second input section 22b to the fourth input section 22d are arranged so that signals from door switches 102a to 102c of the not-shown equipment can be input thereto respectively.

In each input section 22, 2NC contact input (dual) is set as input interface FB. The first logical section 24a is set to use signals from the respective input sections 22 as signals to be operated. In the first logical section 24a, AND logic is set as logical FB.

The output sections 26 are set to use an input signal from the first logical section 24a as a signal to be output, and to output the signal through the output terminals 27. On this occasion, the first output section 26a is set into an output mode in which the first output section 26a outputs the signal immediately, while the second output section 26b is set into an output mode in which the second output section 26b outputs the signal after an off-delay time has passed.

Assume that various settings have been performed based on the first setting information. In this case, when the signal from the emergency stop switch 101 or any one of the signals from the door switches 102a to 102c is OFF (a value designating detection of abnormality), a signal to be output by the PLC 10 also turns OFF. A motor or the like is typically connected to the output terminals 27. When the signal turns OFF, the motor is suspended to suspend the equipment.

Next, description will be made about a case where various settings have been performed based on second setting information.

As shown in Fig. 8, the first input section 22a is arranged so that a signal from an emergency stop switch 101 of not-shown equipment can be input thereto. The second input section 22b is arranged so that a signal from a light curtain sensor 103 of the not-shown equipment can be input thereto. The third input section 22c is arranged so that signals from muting sensors 104 of the not-shown equipment can be input thereto. The fourth input section 22d is arranged so that a signal from a sector switch 105 of the not-shown equipment can be input thereto.

In the first input section 22a, 2NC contact input (dual) is set as input interface FB. In the second input section 22b, semiconductor input is set as input interface FB. In the third input section 22c, muting input is set as input interface FB. In the fourth input section 22d, override input is set as input interface FB.

The first logical section 24a is set to use signals from the second input section 22b to the fourth input section 22d as signals to be operated. In the first logical section 24a, first muting logic is set as logical FB.

The second logical section 24b is set to use signals from the first input section 22a and the first logical section 24a as signals to be operated. In the second logical section 24b, AND logic is set as logical FB.

The output sections 26 are set to use an input signal from the second logical section 24b as a signal to be output, and to output the signal through the output terminals 27. On this occasion, the first output section 26a is set into an output mode in which the first output section 26a outputs the signal immediately, while the second output section 26b is set into an output mode in which the second output section 26b outputs the signal after an off-delay time has passed.

Assume that various settings have been performed based on the second setting information. In this case, when the signal from the emergency stop switch 101 is OFF, the signal to be output by the PLC 10 is also made OFF. When the signal from the light curtain sensor 103 is OFF (a value designating detection of abnormality), the PLC 10 turns OFF the signal to be output. On the other hand, when the signal from the muting sensors 104 is ON (when muting conditions are satisfied) or when the signal from the selector switch 105 is ON (override conditions are satisfied), the PLC 10 invalidates input of the signal from the light curtain sensor 103.

Next, description will be made about a case where various settings have been performed based on third setting information.

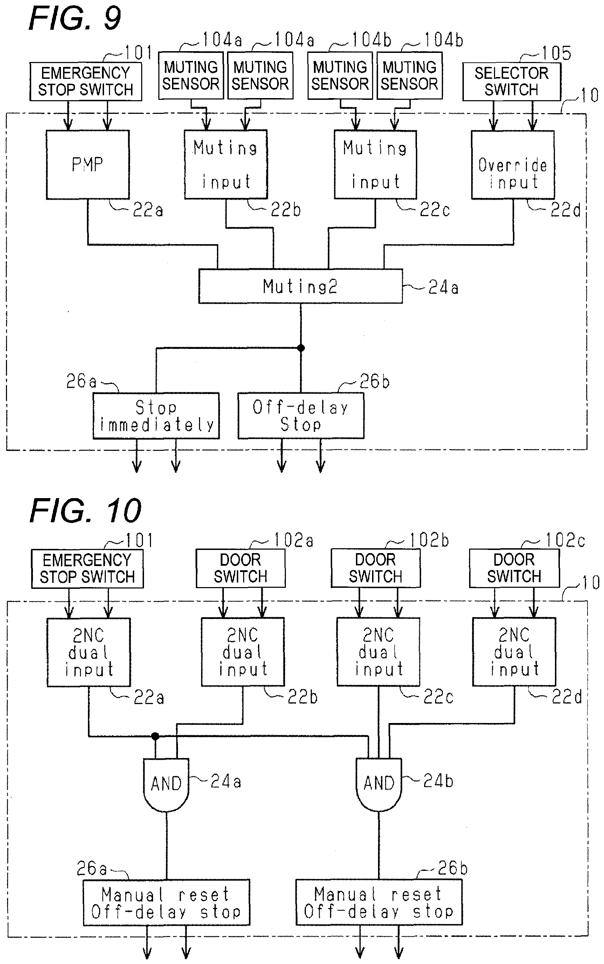

As shown in Fig. 9, the first input section 22a is arranged so that a signal from a light curtain sensor 103 of not-shown equipment can be input thereto. The second input section 22b is arranged so that signals from muting sensors 104a of the not-shown equipment can be input thereto. The third input section 22c is arranged so that signals from muting sensors 104b of the not-shown equipment can be input thereto. The fourth input section 22d is arranged so that a signal from a sector switch 105 of the not-shown equipment can be input thereto.

In the first input section 22a, semiconductor input is set as input interface FB. In the second input section 22b, muting input is set as input interface FB. In the third input section 22c, muting input is set as input interface FB. In the fourth input section 22d, override input is set as input interface FB.

The first logical section 24a is set to use signals from the first input section 22a to the fourth input section 22d as signals to be operated. In the first logical section 24a, second muting logic is set as logical FB. The output sections 26 are set to use an input signal from the first logical section 24a as a signal to be output, and to output the signal through the output terminals 27. On this occasion, the first output section 26a is set into an output mode in which the first output section 26a outputs the signal immediately, while the second output section 26b is set into an output mode in which the second output section 26b outputs the signal after an off-delay time has passed.

Assume that various settings have been performed based on the third setting information. In this case, when the signal from the light curtain sensor 103 is OFF, the signal to be output by the PLC 10 is also made OFF. On the other hand, when the signals from the muting sensors 104a and 104b are ON (when muting conditions are satisfied) or when the signal from the selector switch 105 is ON (override conditions are satisfied), the PLC 10 invalidates input of the signal from the light curtain sensor 103.

Next, description will be made about a case where various settings have been performed based on fourth setting information.

As shown in Fig. 10, the first input section 22a is arranged so that a signal from an emergency stop switch 101 of not-shown equipment can be input thereto. The second input section 22b to the fourth input section 22d are arranged so that signals from door switches 102a to 102c of the not-shown equipment can be input thereto respectively. In each input section 22, 2NC contact input (dual) is set as input interface FB.

The first logical section 24a is set to use signals from the first input section 22a and the second input section 22b as signals to be operated. In the first logical section 24a, AND logic is set as logical FB.

The second logical section 24b is set to use signals from the first input section 22a, the third input section 22c and the fourth input section 22d as signals to be operated. In the second logical section 24b, AND logic is set as logical FB. The first output section 26a is set to use an input signal from the first logical section 24a as a signal to be output, and to output the signal through the first output terminal 27a. On this occasion, the first output section 26a is set into an output mode in which the first output section 26a outputs the signal after an off-delay time has passed. Manual reset input is required to turn ON the output signal.

The second output section 26b is set to use an input signal from the second logical section 24b as a signal to be output, and to output the signal through the second output terminal 27b. On this occasion, the second output section 26b is set into an output mode in which the second output section 26b outputs the signal after an off-delay time has passed. Manual reset input is required to turn ON the output signal.

Assume that various settings have been performed based on the fourth setting information. In this case, when the signal from the emergency stop switch 101 is OFF, the signals output by the PLC 10 also turn OFF. When the signal from the door switch 102a from which the signal should be supplied to the second input section 22b are OFF, the PLC 10 turns OFF the output signal from the first output terminal 27a. When the signal from the door switch 102b from which the signal should be supplied to the third input section 22c or the fourth input section 22d is OFF, the PLC 10 turns OFF the output signal from the second output terminal 27b.

Next, description will be made about a case where various settings have been performed based on fifth setting information.

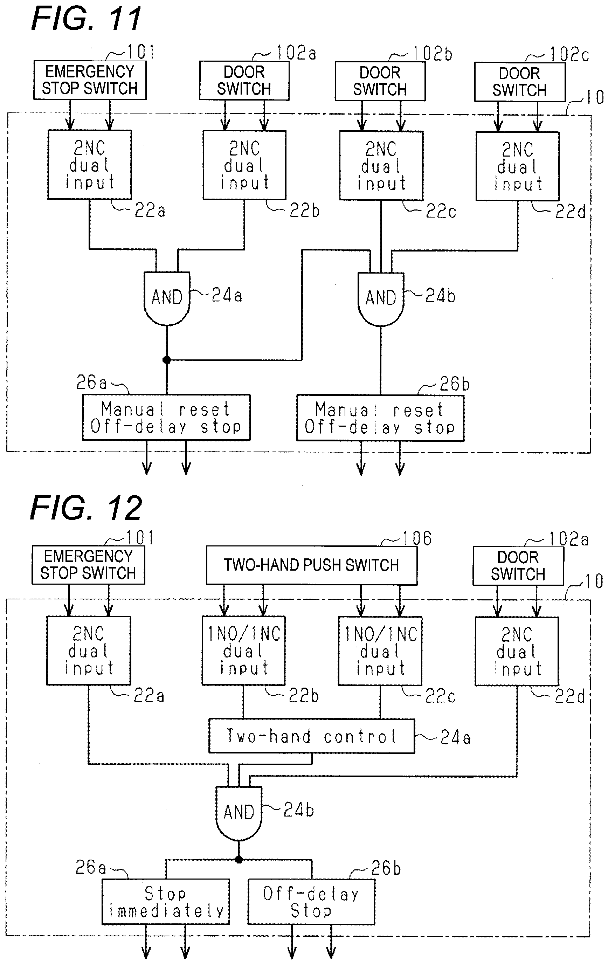

As shown in Fig. 11, the first input section 22a is arranged so that a signal from an emergency stop switch 101 of not-shown equipment can be input thereto. The second input section 22b to the fourth input section 22d are connected to door switches 102a to 102c of the not-shown equipment respectively so that signals from the door switches 102a to 102c can be input thereto respectively.

In each input section 22, 2NC contact input (dual) is set as input interface FB.

The first logical section 24a is set to use signals from the first input section 22a and the second input section 22b as signals to be operated. In addition, in the first logical section 24a, AND logic is set as logical FB. The second logical section 24b is set to use signals from the first logical section 24a, the third input section 22c and the fourth input section 22d as signals to be operated. In the second logical section 24b, AND logic is set as logical FB.

The first output section 26a is set to use an input signal from the first logical section 24a as a signal to be output, and to output the signal through the first output terminal 27a. On this occasion, the first output section 26a is set into an output mode in which the first output section 26a outputs the signal after an off-delay time has passed. Incidentally, manual reset input is required to turn ON the output signal.

The second output section 26b is set to use an input signal from the second logical section 24b as a signal to be output, and to output the signal through the second output terminal 27b. On this occasion, the second output section 26b is set into an output mode in which the first output section 26a outputs the signal after an off-delay time has passed. Incidentally, manual reset input is required to turn ON the output signal.

Assume that various settings have been performed based on the fifth setting information. In this case, when the from the emergency stop switch 101 or the door switch 102a from which the signal should be supplied to the second input section 22b is OFF, the PLC 10 turns OFF all the output signals. When the signal from the door switch 102b or 102c from which the signal should be supplied to the third input section 22c or the fourth input section 22d is OFF, the PLC 10 turns OFF the output signal from the second output terminal 27b.

Next, description will be made about a case where various settings have been performed based on sixth setting information.

As shown in Fig. 12, the first input section 22a is arranged so that a signal from an emergency stop switch 101 of not-shown equipment can be input thereto. The second input section 22b and the third input section 22c are arranged so that signals from a two-hand push switch 106 of the not-shown equipment can be input thereto respectively. A signal from a left switch of the two-hand push switch 106 can be input to the second input section 22b, and a signal from a right switch of the two-hand push switch 106 can be input to the third input section 22c. The fourth input section 22d is arranged so that a signal from a door switch 102a of the not-shown equipment can be input thereto.

In the first input section 22a and the fourth input section 22d, 2NC contact input (dual) is set as input interface FB. On the other hand, in the second input section 22b and the third input section 22c, 1NO/1NC contact input (dual) is set as input interface FB.

The first logical section 24a is set to use signals from the second input section 22b and the third input section 22c as signals to be operated. In the first logical section 24a, two-hand control logic is set as logical FB. The second logical section 24b is set to use signals from the first logical section 24a, the first input section 22a and the fourth input section 22d as signals to be operated. In the second logical section 24b, AND logic is set as logical FB.

Each output section 26 is set to use a signal from the second logical section 24b as a signal to be output, and to output the signal through each output terminal 27. On this occasion, the first output section 26a is set into an output mode in which the first output section 26a outputs the signal immediately, while the second output section 26b is set into an output mode in which the second output section 26b outputs the signal after an off-delay time has passed.

Assume that various settings have been performed based on the sixth setting information. In this case, when the signal from the emergency stop switch 101 or the door switch 102a is OFF, the PLC 10 turns OFF the output signals. When the switches in the two-hand push switch 106 are not pushed simultaneously (within 0.5 seconds), the PLC 10 turns OFF the output signals.

Next, description will be made about a case where various settings have been performed based on seventh setting information.

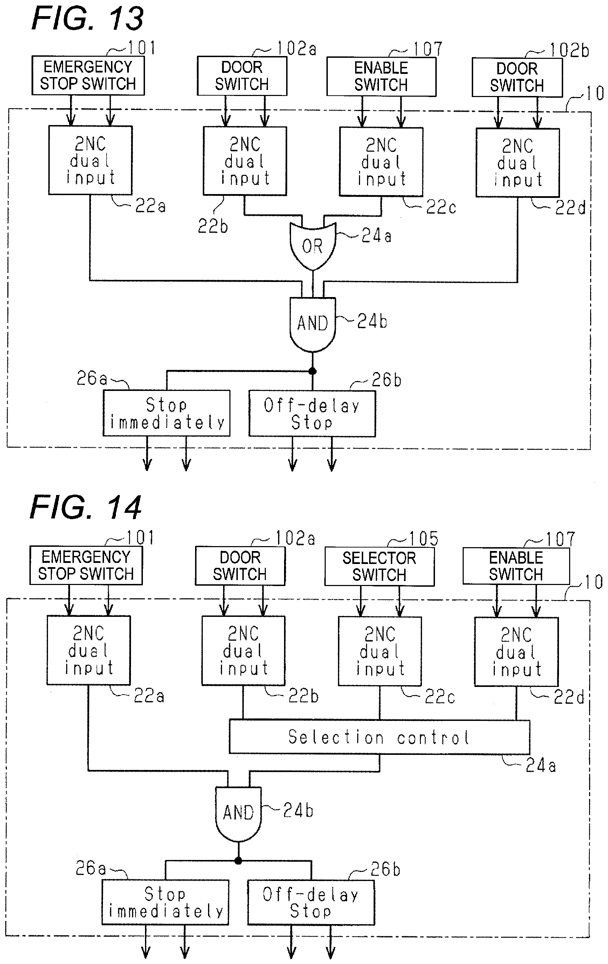

As shown in Fig. 13, the first input section 22a is arranged so that a signal from an emergency stop switch 101 of not-shown equipment can be input thereto. The second input section 22b and the fourth input section 22d are arranged so that signals from door switches 102a and 102b of the not-shown equipment can be input thereto respectively. The third input section 22c is arranged so that a signal from an enable switch 107 of the not-shown equipment can be input thereto.

In each input section 22, 2NC contact input (dual) is set as input interface FB.

The first logical section 24a is set to use signals from the second input section 22b and the third input section 22c as signals to be operated. In the first logical section 24a, OR logic is set as logical FB. The second logical section 24b is set to use signals from the first logical section 24a, the first input section 22a and the fourth input section 22d as signals to be operated. In the second logical section 24b, AND logic is set as logical FB.

Each output section 26 is set to use a signal from the second logical section 24b as a signal to be output, and to output the signal through each output terminal 27. On this occasion, the first output section 26a is set into an output mode in which the first output section 26a outputs the signal immediately, while the second output section 26b is set into an output mode in which the second output section 26b outputs the signal after an off-delay time has passed.

Assume that various settings have been performed based on the seventh setting information. In this case, when the signal from the emergency stop switch 101 or the door switch 102b from which the signal should be supplied to the fourth input section 22d is OFF, the PLC 10 turns OFF the output signals. When the signal from the door switch 102a from which the signal should be supplied to the second input section 22b is OFF, and when the signal from the enable switch 107 is OFF, the PLC 10 turns OFF the output signals. To say other words, when the signal from the enable switch 107 is ON (at the time of normal operation), the PLC 10 invalidates the signal from the door switch 102a.

Next, description will be made about a case where various settings have been performed based on eighth setting information.

As shown in Fig. 14, the first input section 22a is arranged so that a signal from an emergency stop switch 101 of not-shown equipment can be input thereto. The second input section 22b is arranged so that a signal from a door switch 102a of the not-shown equipment can be input thereto. The third input section 22c is arranged so that a signal from a selector switch 105 of the not-shown equipment can be input thereto. The fourth input section 22d is arranged so that a signal from an enable switch 107 of the not-shown equipment can be input thereto.

In each input section 22, 2NC contact input (dual) is set as input interface FB.

The first logical section 24a is set to use signals from the second input section 22b to the fourth input section 22d as signals to be operated. In the first logical section 24a, input selection logic is set as logical FB. On the other hand, the second logical section 24b is set to use signals from the first logical section 24a and the first input section 22a as signals to be operated. In the second logical section 24b, AND logic is set as logical FB.

Each output section 26 is set to use a signal from the second logical section 24b as a signal to be output, and to output the signal through each output terminal 27. On this occasion, the first output section 26a is set into an output mode in which the first output section 26a outputs the signal immediately, while the second output section 26b is set into an output mode in which the second output section 26b outputs the signal after an off-delay time has passed.

Assume that various settings have been performed based on the eighth setting information. In this case, when the signal from the emergency stop switch 101 is OFF, the PLC 10 turns OFF the output signals. When the signal from the door switch 102a is OFF, or when the signal from the enable switch 107 is OFF, the PLC 10 turns OFF the output signals. Based on the state of the signal input from the selector switch 105, the PLC 10 determines which signal should be used for turning OFF the output signals when the signal is OFF.

In the embodiment, new setting information can be created and stored by not-shown equipment such as a personal computer serving as a program development support device. The not-shown equipment is connected to the communication port 15 provided in the control board 13 of the PLC 10. In particular, a keyboard or a mouse serving as setting information operating means and connected to the personal computer is operated so that various information can be selected to create setting information on a display screen provided in the personal computer. When the created setting information is transmitted to the PLC 10, the setting information can be stored therein. The setting information stored newly is arranged so that it can be set by operation of the setting switch 16, in the same manner as the other first setting information to the eighth setting information.

Next, description will be made about a method for creating new setting information.

In a personal computer connected to the PLC 10, an operator can select one from input interface FBs prepared in advance, so as to set it as an input interface FB for each input section 22, which belongs to the setting information.

In the personal computer connected to the PLC 10, the operator can select ones from the first input section 22a to the fourth input section 22d to set them as (output sources of) signals to be operated in the first logical section 24a, which belong to the setting information. In the personal computer connected to the PLC 10, the operator can select one from input interface FBs prepared in advance for the first logical section 24a, so as to set it as an input interface FB of the first logical section 24a, which belongs to the setting information.

In the same manner, in the personal computer connected to the PLC 10, the operator can select ones from the first logical section 24a, and the first input section 22a to the fourth input section 22d to set them as (output sources of) signals to be operated in the second logical section 24b, which belong to the setting information. In the personal computer connected to the PLC 10, the operator can select one from input interface FBs prepared in advance for the second logical section 24b, so as to set it as an input interface FB for the second logical section 24b, which belongs to the setting information.

In the same manner, in the personal computer connected to the PLC 10, the operator can select ones from the first logical section 24a, the second logical section 24b, and the first input section 22a to the fourth input section 22d to set them as (output sources of) signals to be operated in the third logical section 24c, which belong to the setting information. In the personal computer connected to the PLC 10, the operator can select one from input interface FBs prepared in advance for the third logical section 24c, so as to set it as an input interface FB for the third logical section 24c, which belongs to the setting information.

In the personal computer connected to the PLC 10, the operator can select one from the first logical section 24a to the third logical section 24c, and the first input section 22a to the fourth input section 22d to set it as (an output source of) a signal to be output from the first output section 26a, which belongs to the setting information. In the personal computer connected to the PLC 10, the operator can select one from output modes prepared in advance, so as to set it as an output mode of the first output section 26a, which belongs to the setting information.

In the same manner, in the personal computer connected to the PLC 10, the operator can select one from the first logical section 24a to the third logical section 24c, and the first input section 22a to the fourth input section 22d to set it as (an output source of) a signal to be output from the second output section 26b, which belongs to the setting information. In the personal computer connected to the PLC 10, the operator can select one from output modes prepared in advance, so as to set it as an output mode of the second output section 26b, which belongs to the setting information.

When the operator makes those selections to create the setting information in the personal computer, the setting information is transmitted to the PLC 10 and stored therein. When the stored setting information is selected by the setting switch 16, the PLC 10 can perform various settings based on the selected setting information.

As has been described in detail, the embodiment has the following effects.
(1) In the PLC 10, the number of input sections 22, the number of output sections 26, and the number of logical sections 24 are determined in advance. That is, the input sections 22 and the logical sections 24 that can be selected as output sources of signals to be operated in each logical section 24 are determined in advance. That is, the hierarchical structure of the logical sections 24 is also determined in advance. In addition, the logical sections 24 that can be selected as output sources to be output in the output sections 26 are also determined in advance. In addition, contents that can be set as contents of a logical operation in each logical section 24 are also determined in advance. In this manner, once the operator determines output sources and contents of logical operations within their determined ranges, the operator can complete a program for operating the PLC 10. Thus, functions can be changed easily. In addition, programs that can be set can be restricted in advance.
(2) The first setting information to the eighth setting information are stored in advance so that the operator can perform various settings only if the operator operates the setting switch 16 to thereby select setting information. Thus, it is not necessary to select connection destinations or contents of determinations to create all the setting information, but it is possible to change functions more easily.
(3) The number of logical sections 24 is set to be smaller than the number of input sections 22 by one. Thus, enough logical sections 24 to perform logical operations on input signals can be provided.
(4) Binary signals are input to the input sections 22, the logical sections 24 and the output sections 26 respectively, and the input sections 22, the logical sections 24 and the output sections 26 output binary signals respectively. Due to the module structure in which ON/OFF binary signals are delivered among blocks, it is possible to suppress patterns with which a program should be verified.
(5) The setting information can be created if at least the output sources of signals to be operated in each logical section 24, the contents of a logical operation in each logical section 24, and an output source of a signal to be output in each output section 26 are selected in a personal computer. Thus, the setting information can be created more easily.
(6) The ribs 11a and 11b disposed in one and the same straight line are provided so that the control board 13 and the input/output board 14 can be held therebetween from the outside when the control board 13 and the input/output board 14 are received in the case 11. The ribs 11a and 11b are disposed substantially on the same straight line as the connectors 13a and 14a when the ribs 11a and 11b are disposed to hold the control board 13 and the input/output board 14 therebetween. That is, the connectors 13a and 14a are also disposed between the ribs 11a and 11b when the ribs 11a and 11b are disposed to hold the control board 13 and the input/output board 14 therebetween. Since the ribs 11a and 11b are disposed in this manner, the ribs 11a and 11b and the connectors 13a and 14a serve as supports so that distortion of the case 11 can be suppressed as well as possible even if an impact is applied from a direction perpendicular to the control board 13 and the input/output board 14. Thus, the cover 12 can be suppressed from dropping off due to the distortion of the case 11. In addition, the case 11 can be prevented from cracking easily.
(7) Each input section 22 is arranged so that one and the same signal can be input thereto through the two input terminals 21. When there occurs a problem in one route, the problem can be detected instantaneously due to the input signal made redundant. In the same manner, each output section 26 is arranged so that one and the same signal can be output therefrom through the two output terminals 27. When there occurs a problem in one route, the problem can be detected instantaneously due to the output signal made redundant.
(8) In the first logical section 24a, the number of logical operations that can be set is made larger than that in the second logical section 24b or the third logical section 24c, and logical operations with complicated contents can be set. As a result, patterns that can be set can be suppressed in comparison with a case where the number of logical operations in the second logical section 24b or the third logical section 24c is increased. It is therefore possible to reduce patterns with which operation should be verified.

Incidentally, the above-described embodiment can be implemented in another embodiment (another example) as follows.
- In the above-described embodiment, the number and kinds of sets of setting information stored in advance by the PLC 10 may be changed desirably. In addition, the contents of the setting information stored in advance may be changed desirably.
- Although the above-described embodiment has a configuration in which new setting information can be created in a personal computer connected to the PLC 10, the PLC 10 has a configuration in which new setting information can be created. In this case, the PLC 10 has input/output means for allowing the PLC 10 to control (create) new setting information.
- In the above-described embodiment, the contents and number of input interface FBs that can be selected in each input section 22 may be changed desirably. For example, only one kind of input interface FB may be prepared. In addition, an input interface FB may be set in advance.
- In the above-described embodiment, the contents and number of output modes that can be selected in each output section 26 may be changed desirably. For example, only one kind of output mode may be prepared. In addition, an output mode may be set in advance.
- In the above-described embodiment, the contents and number of logical FBs that can be selected in each logical section 24 may be changed desirably.
- In the above-described embodiment, the number of hierarchies in the logical sections 24 may be changed desirably. It may be two or four. Incidentally, it is desired that the number of logical sections 24 is a number obtained by subtraction of 1 from the number of input sections 22 (number of signals to be input).
- In the above-described embodiment, the first setting information to the eighth setting information stored in the PLC 10 does not have to be stored.
- The above-described embodiment has a configuration in which the first setting information to the eighth setting information stored in the PLC 10 can be selected by the setting switch 16 provided in the PLC 10. However, configuration may be made so that the first setting information to the eighth setting information can be selected by a personal computer connected to the PLC 10. In this case, the setting switch 16 does not have to be provided.
- In the above-described embodiment, the kinds of switches connected to the input terminals 21 may be changed desirably. In the same manner, equipment that is connected to the output terminals 27 may be changed desirably.

### DESCRIPTION OF REFERENCE SYMBOL(S)

- 10:: Programmable Controller (PLC)
- 11:: Case
- 11a, 11b:: Rib
- 12:: Cover
- 12a:: Through Hole
- 13:: Control Board
- 13a:: Connector of Control Board
- 14:: Input/Output Board
- 14a:: Connector of Input/Output Board
- 15:: Communication Port
- 16:: Setting Switch (Operating Means)
- 20:: Input Portion
- 21:: Input Terminal
- 21a to 21d:: First Input Terminal to Fourth Input Terminal
- 22:: Input Section (Input Block)
- 22a to 22d:: First Input Section to Fourth Input Section
- 23:: Logical Portion
- 24:: Logical Section (Logical Block)
- 24a to 24d:: First Logical Section to Fourth Logical Section
- 25:: Output Portion
- 26:: Output Section (Output Block)
- 26a:: First Output Section
- 26b:: Second Output Section
- 27:: Output Terminal
- 27a:: First Output Terminal
- 27b:: Second Output Terminal
- 28:: Storage Portion (Storage Means)
- 29:: Setting Portion (Setting Means)
- 101:: Emergency Stop Switch
- 102:: Door Switch
- 103:: Light Curtain Sensor
- 104:: Muting Sensor
- 105:: Selector Switch
- 106:: Two-Hand Push Switch
- 107:: Enable Switch

## Claims

1. A programmable controller comprising:
one or plural input blocks to which signals can be input from an outside;
one or plural output blocks from which signals can be output to the outside;
one or plural logical blocks capable of performing various local operations based on input signals and capable of outputting signals as results of the operations; and
setting means for performing various settings,
wherein contents that can be set as contents of the logical operation of each of the logical blocks are determined in advance,
wherein based on setting information, the setting means sets, from the input blocks and the logical blocks, one or plural output sources of signals to be operated in each of the logical blocks, and sets the contents of the logical operation of the logical block,
wherein based on the setting information, the setting means sets, from the logical blocks, an output source of a signal to be output from each of the output blocks, and
wherein the setting information comprises at least information about the output sources of signals to be operated in each of the logical blocks, information about the contents of the logical operation of each of the logical blocks, and information about the output source of the signal to be output in each of the output blocks.

2. The programmable controller according to claim 1,
wherein the programmable controller comprises:
operating means operable by an operator; and
storage means for storing a plurality of kinds of the setting information,
wherein the setting means selects, based on an operation on the operating means, setting information from the setting information stored in the storage means, and performs various kinds of settings based on the selected setting information.

3. The programmable controller according to claim 1 or 2,
wherein a number of logical blocks is set to be smaller than a number of input blocks by one.

4. The programmable controller according to any one of claims 1 to 3,
wherein binary signals are input to the input blocks, the logical blocks and the output blocks, respectively, and
wherein the input blocks, the logical blocks and the output blocks output binary signals, respectively.

5. A program development support device connectable to the programmable controller according to any one of claims 1 to 4, the program development support device comprising:
setting information operating means operable by an operator,
wherein the setting information is created by selecting, based on an operation of the setting information operating means, at least the output sources of signals to be operated in each of the logical blocks, the contents of the logical operation of the logical block, and the output source of the signal to be output from each of the output blocks.
